# EUROPEAN PATENT SPECIFICATION

(11) **EP 3 065 573 B1**
(45) Date of publication and mention of the grant of the patent: **06.09.2017**
(21) Application number: 14790582.2
(22) Date of filing: 28.10.2014
(51) Int. Cl.: A23L 33/17, A23J 3/34, A23L 33/16, A21D 2/36

(54) **NUTRACEUTICAL COMPOSITION OF PLANT FOODS**
NUTRAZEUTISCHE ZUSAMMENSETZUNG AUS PFLANZENNAHRUNG
COMPOSITION NUTRICEUTIQUE À BASE D'ALIMENTS VÉGÉTAUX

(30) Priority: 31.10.2013 IT RM20130599
(43) Date of publication of application: 14.09.2016
(73) Proprietor: NORA S.R.L., 80132 Napoli (IT)
(72) Inventor: BENCIVENGA, Gennaro, 80021 Afragola (NA) (IT)
(74) Representative: Fiammenghi, Eva
(86) International application number: PCT/EP2014/073074
(87) International publication number: WO 2015/063058

(56) References cited:
- EP-A1- 1 829 450
- WO-A1-00/76321
- WO-A1-2008/103893
- US-A- 4 624 856

## Description

### Field of the art

The present invention refers to the food sector. More in detail, the present invention refers to a new chemical composition, prepared by using natural precursors, adapted to be employed in the preparation of food products. Specifically, for the preparation of baked products such as: bread, pasta, pizza, piadina and the like, and for the preparation of meat-based food products, preferably for the preparation of hamburgers. Said composition is adapted to increase the time duration of the finished food product, with respect to analogous products not containing the composition in question, to improve the workability of the aforesaid baked food products, i.e. of pasta, bread, pizza, piadina and the like, during the preparation thereof, and at the same time to improve the nutritional properties of the food products prepared with said composition.

### State of the art

Bread is among the most widespread and consumed food products throughout the world, and it undoubtedly occupies one of the primary positions. This food, which has very ancient origins, is a product obtained from the fermentation, followed by an optional leavening, and by the subsequent baking in an oven. For bread as well as for other flour food products, such as pizza, pasta, piadina and the like, the fermentation process is rather complex and is accompanied by the addition of substances such as herbs, ferments, seeds, legumes and meat or fish proteins.

In such a manner, the fermentation and the addition of protein and lipid substances also has a function of nutritional and organoleptic enrichment, which in most cases also involves the increase of finished product preservability. All of the aforesaid characteristics are very important and desirable in places and situations where desired nutrients are rare or in any case not always available. In the preparation of the aforesaid foods, and in particular of bread, there is initially the step of grinding the wheat. Conventionally, this step did not provide for the separation of all the components of the wheat, in particular the separation of the oily and protein parts from the carbohydrates, making the flours preservable for relatively short time periods overall. The flours thus processed, being rich in proteins, oils and vitamins, in fact tended to be altered and become rancid. At any rate, the need for long-term preservation of this food type was not widely felt. Today, however, modern industrial technology actuates the separation of the flour fractions in a rigorous manner, obtaining product advantages with the increased possibility to preserve food for very long time periods, even in non-optimal conditions, given that the flours are essentially constituted by starches. Nevertheless, the bread produced by the flours thus treated does not have high qualities, it is almost always insipid and lacks important nutrient elements, given that it is substantially constituted by impoverished starches. For such grounds, it is necessary to add plant, animal substances etc. in order to reach the acceptable levels of technical and organoleptic characteristics required in the finished product.

More in detail, in common practice with regard to dry or moist baked products, various types of ingredients are associated in the composition that are adapted to make the product more savory, softer, nutritious and with greater preservability. This is particularly evident in baked products that use poor flours or those without glutens, such that the use of fatty ingredients not only facilitates the attractiveness, but also the practical nature of manufacturing. In recent years, there has been an increase in the use of plant proteins in food products both due to the increasing demand for healthy foods, i.e. foods lacking cholesterol and saturated fats, typical of foods of animal origin, and due to economical grounds.

Baked products is one of the sectors where plant proteins are most widely used. Here, the addition of plant proteins has nutritional advantages due to the ideal combination between essential amino acids present in the flours of cereals and those present in the flours of legumes. In addition, there are advantages in the macroscopic structural properties of the finished product: the addition of such proteins in fact contributes to giving more structure and to facilitating the leavening. The enrichment with plant proteins also allows retaining greater quantities of water in the dough; also the effect on the organoleptic properties is usually positive, so long as the addition percentages are not too high. Independent of the sector of use, the plants most used as sources of plant proteins belong to the Fabaceae family, i.e. to the Leguminosae family, which is characterized for its rich protein content which usually varies from 17% to 30% with regard to fresh weight. The following are found on the market: flours, with a protein quantity not greater than 65%; concentrates, with a protein content greater than 65%; and the isolates with a protein content greater than 90%. Such proteins show interesting chemical and rheological characteristics which make their addition as texturizers advantageous. In particular, their addition to the food brings, by way of a non-limiting example, advantages in terms of capacity to retain water and fats, with increased emulsifiability and easy digestibility. Among the most widely used legumes, there is soy, which represents the preferred protein source; peas, from which proteins are obtained in highly pure form; lupine, which is characterized not only for a very high protein content, but also for a considerable fiber content, both soluble and insoluble fibers, with the relative beneficial effects for the health of the gastrointestinal tract. Scientific studies sustain that by substituting up to 30% by weight of wheat flour with lupine flour, it is possible to increase the protein and fiber content of baked products, without altering taste, color and aroma; other usable legumes are the peanuts, known for their capacity to confer a pleasant aroma of roasted peanuts to the product; and other legumes such as beans, chick peas, carobs and lentils.

Object of the present invention, described in detail hereinbelow, is that of providing a new source of plant substances to be combined with flours, for the obtainment of food products such as: bread, pasta, pizza, piadina and the like, and for the preparation of meat-based products, typically for the preparation of hamburgers. More in detail, the present invention proposes a new composition of natural plant foods, different from those currently used in the field of application of the invention, adapted to impart improved characteristics in the finished product in terms of: increased possibility to preserve the product itself, improved workability of the dough during product processing, increased pleasantness of the taste and smell. In addition, as will be explained in greater detail below in the course of the description of the present invention, said composition imparts to the finished product a redistribution of the percentages by weight of its constituent elements, which has shown to be considerably healthy for the human organism, thus representing a composition with nutraceutical properties. Said composition is adapted to use elements of organic and hypoallergenic cultural origin, as well as elements that are easily found and available. WO 2008/103893 A1 discloses a blend mixture for commercial preparation of baked goods comprising a sweetener composition.

### Description of the invention

The present industrial invention patent application describes a new nutraceutical composition to be used preferably in the preparation of baked food products such as: pasta, bread, pizza, piadina and the like and in the preparation of meat-based food products such as hamburgers, meatballs, meat loaf and, generally, products prepared using ground meat. Said composition is adapted to increase the preservability of the finished product, to improve the workability of the components of said product during the processing steps and to enhance the nutritional properties thereof. As a consequence of the physical-chemical properties of its constituent substances, said composition in fact shows a beneficial effect for the human organism. More in detail, the nutraceutical composition, object of the present description, comprises specific natural plant foods which, suitably combined and worked, allow increasing the water content in the finished product when said composition is supplied with the ingredients necessary during the preparation of the food product of interest and in particular in the preparation of products such as pasta, bread, pizza, piadina and the like and in the preparation of meat-based food products such as hamburgers. Still more in detail, the present nutraceutical composition comprises natural plant foods such: tuber(s) of the plant belonging to the *Solanum tuberosum* species; cucurbita pepo fruit(s) of the *Cucurbitaceae* family; *Daucus carota* root(s); *Allium cepa* fruit(s) of the *Liliaceae* family; *Capsicum* fruit(s) of the *Solanaceae* family; *Prunus dulcis* seeds; olive oil and edible salts. The nutraceutical composition in question represents a valid substitute, in the preparation of various food products such as the aforesaid baked products and meat-based products, for chemical adjuvants, lard, margarine, hydrogenated vegetable fats, butter, milk, egg, olive oil, coconut palm etc. The abovementioned plant foods, comprised in the composition, in fact comprise constituent substances that, when added to the ingredients necessary for obtaining the product, facilitate the retention of water within the product itself, even when the latter is subjected to cooking. More specifically, the plant foods selected for the purpose of the invention *per se* comprise considerable water quantities and are also characterized for the high quantity of sodium, potassium, iron, calcium and manganese ions, as well as for the presence of healthy substances such as vitamin A, vitamin B1 (thiamine), B2 (riboflavin), vitamin PP (niacin), vitamin B5, vitamin C, and for the presence of still other substances. At any rate, the capacity to confer a greater softness to the product, thus also facilitating the increased preservation thereof, is substantially due to the increased quantity of water retained within the used ingredients.

This behavior is probably due to the presence of the aforesaid metal ions contained in the plant elements of the present nutraceutical composition: the tendency of said ions to give rise to solvation phenomena when present in aqueous environments is indeed widely recognized. Hence, the addition of the present composition within the dough would involve the introduction of said cations which would thus be solvated by the water molecules present in the ingredients of the product being processed. As a consequence of the solvation phenomenon, the water contained in the product would be able to be more greatly retained in the latter, even during cooking, by virtue of the interactions that would be created between the aforesaid metal ions and the water molecules already present in the starting ingredients of the product. In other words, the present composition does not add water to the product, even if it does not lack water, but rather it prevents the loss of water from the dough itself, by evaporation, during cooking. The result of the addition of the nutraceutical composition consists of obtaining a finished product such as bread, pasta, pizza, piadina and the like, and meat-based products like hamburgers with improved qualities in terms of: greater time preservation, improved workability of the dough during preparation, and beneficial effects for the human organism. A further factor that could contribute to and be responsible for the increase of the water quantity encountered in the finished bakery product is probably given by the content of soluble plant fibers contained in the present composition. Various scientific studies have in fact demonstrated that many soluble fibers have the capacity to bind and retain water with the solutes dissolved therein, as well as the ability to capture and retain, in their gel-like structure matrix, many organic molecules like bile acids, sterols, toxic compounds and other discard materials that are then expelled from the organism. All of the above also contributes to the beneficial effects of the product, obtained with the composition in question, on the human organism. It should be indicated that one of the aspects that makes the present nutraceutical composition quite unique is the holistic resultant due to the contribution of the synergistic interaction between the various components. More clearly, it was observed that the assumption of the present nutraceutical composition, like that of the food products containing it, brings greater benefits than that encountered following the separate assumption of the components in question. Hence, the result of the combination of the components, the object of the invention, leads to an enhancement of the functionalities of the single components on the human organism.

### Detailed description of the invention

The present industrial invention patent application refers to a nutraceutical composition of natural plant foods, to be added to the ingredients necessary for the preparation of baked products such as pasta, bread, pizza, piadina and the like, during the preparation of said products, and for the preparation of meat-based products such as, by way of a non-limiting example, hamburgers. Said composition is more specifically composed of the edible parts of the following plant species: *Solanum tuberosum* tuber(s); *cucurbita pepo* fruit(s); *Daucus carota* root(s); *Allium cepa* fruit(s); *Capsicum* fruit(s); *prunus dulcis* seeds; olive oil; edible salts.

Still more in detail, the components of said composition are divided and used for the preparation of the nutraceutical composition in question, having the following ratios by weight: *3 (solanum tuberosum* fruit(s)) : 2 (*cucurbita pepo* fruit(s)) : 2 (*daucus carota* root(s)) : 1 (*allium cepa* fruit(s)) : 0.15 (*capsicum* fruit(s)) : 0.14 (extra virgin olive oil) : 0.132 (cooking salt) : 0.02 (*prunus dulcis* seed(s)).

The synthesis of the present nutraceutical composition initially provides that the plant species used are heated, together, in water until boiling occurs, i.e. to the temperature of 90 °C; once such temperature is reached, the system is left to react at a constant temperature greater than 100°C, under boiling, for a time which varies from fifty to seventy-five minutes and preferably for a time interval of sixty-six minutes. At the end of the thermal treatment, the product of the reaction is ground, emulsified and homogenized through the use of a mixer and with the aid of instrumentation and technologies that are well-known in the field of application of the invention. The resulting composition is in native suspension form, having pH 6, and is then left to cool and decant.

As repeated several times in the course of the present description, the composition, object of the present invention, possesses nutraceutical properties that have shown to be particularly beneficial and salutary for the human organism. It should be specified that the intention of the present document is to describe and claim a composition, obtained from a base of natural plant foods, to be used for the preparation of food products such as: baked products like bread, pizza, pasta, piadina and the like, and meat-based products like hamburgers, in order to increase the preservation lifetime of the finished product, and to improve the workability of the dough of the ingredients necessary for the obtainment of such product. All of the above occurs while imparting nutraceutical properties to the food product obtained with said composition. In addition to the composition, the present document also intends to claim the use of said composition for the preparation of the abovementioned baked products and meat-based products as well the baked products and meat-based products obtained with the use of the composition in question. In the preparation of the meat-based food products like hamburgers, it is preferably to use the composition added with a predefined quantity of an ingredient of any one flour such as, by way of non-limiting example, buckwheat flour, spelt flour, barley flour, rice flour, corn flour, cassava flour, soy flour, chestnut flour, flour of legumes and cereals, and flours obtained from dry fruit, among other flours, also considering if it is desired to prepare a product with or without glutens. At any rate, the meat-based food product can also be obtained by using the composition as is, i.e. without the flour ingredient. The beneficial effects that the present composition advantageously confers to the human organism following the assumption of products prepared using said composition, are a natural and inevitable consequence of the properties imparted to the finished food product due to the addition of the composition in question. In the present document, it is therefore taken for granted that the average man skilled in the art recognizes the inevitable use of said composition in order to improve the health of all the people who normally eat baked products, homemade or industrially prepared, and/or meat-based products like hamburgers. In addition, the administration of said composition was also found to have a beneficial effect on animal species. Hence said composition is advantageously also adapted to be used as animal feed.

With regard to the aforesaid beneficial effects for the organism, and specifically for the human organism, several examples are reported below of the tables including the results obtained on the analysis conducted on samples of piadina and special-bread prepared using the nutraceutical composition according to the present invention:

### Example I.

**Tables 1 (a) and 1 (b): Results of the analysis tests conducted on a piadina sample:** 0 **and 00 wheat flower, 12% plant composition, salt, E450i, E500i, wheat starch, E 200.**

**Table 1 (a)**

| **Nutritional information (per 100 g)** | |
|---|---|
| Calories 276.6 | Calories from fats 59.4 |
| **Per portion** | **% daily values** |
| Total fats 6.6 g | 10.6% |
| Saturated fats 1.71 g | 9.0% |
| Trans fats 0 g | / |
| Cholesterol / | / |
| Sodium 0.43 g | 17.2 % |
| Total carbohydrates 45.23 g | 15.1% |
| Dietary fiber 1.56 g | 6.2% |
| Sugars 5.9 g | / |
| Proteins 8.29 g | 13.8% |
| Iron / | / |
| Calcium / | / |
| Vitamin A / | / |
| Vitamin C / | / |
| *The daily percentage values make reference to a diet of 2000 calories per day | |

| | Calories | 2000 |
|---|---|---|
| Total fats | Less than | 28% = 62.2 g |
| Saturated fats | Less than | 32% = 19 g |
| Cholesterol | Less than | 300 mg |
| sodium | Less than | 2.5 g |
| Total carbohydrates | Less than | 60% = 300 g |
| Dietary fiber | Less than | 25 g |
| proteins | Less than | 12% = 60 g |
| Iron | Less than | 12 mg |
| Calcium | Less than | 1200 mg |
| Vitamin A | Less than | 700 µg |
| Vitamin C | Less than | 60 mg |

**Table 1 (b)**

| **Test** | **U.M.** | **Result** | **Method** | **Uncertainty** | **LOQ** | **V. guide** | **C.M. A.** | **Recovery (%)** |
|---|---|---|---|---|---|---|---|---|
| Proteins | G/100 g | 8.29 | AM 3 2010 Rev.11 | ± 0.48 | 0.2 | | | 100 |
| Total carbohydrates | G/100 g | 45.23 | *Calculation | | 0.1 | | | |
| Total sugars | % | 5.90 | AM 12 2010 REV. 10 | ± 0.18 | 0.5 | | | |
| fructose | % | <0.100 | AM 12 2010 REV. 10 | | 0.1 | | | 93.5 |
| glucose | % | 0.460 | AM 12 2010 REV. 10 | ± 0.045 | 0.1 | | | 85.5 |
| saccharose | % | <0.10 | AM 12 2010 REV. 10 | | 0.1 | | | 95.5 |
| maltose | % | 5.44 | AM 12 2010 REV. 10 | ± 0.53 | 0.1 | | | 88.0 |
| lactose | % | <0.10 | AM 12 2010 REV. 10 | | 0.1 | | | 83.5 |
| starch | G/100 g | 39.33 | Reg CEE 152/2009 27/01/2009 GU CEE L54 26/02/2009 AH IV from p. 47 to p. 50 | ± 1.18 | 0.05 | | | |
| Total fats | g/100 g | 6.60 | AM 17 2010 | ± 0.36 | 0.1 | | | |
| (acidic hydrolysis) | | | Rev. 9 | | | | | |
| Saturated fats | % | 1.71 | UNI EN ISO 5508:1998 + UNI EN ISO 5509:2001 | ± 0.09 | 0.1 | | | |
| Monounsat urated fats | % | 1.42 | UNI EN ISO 5508:1998 + UNI EN ISO 5509:2001 | ± 0.07 | 0.01 | | | |
| Polyunsatu rated fats | % | 3.470 | UNI EN ISO 5508:1998 + UNI EN ISO 5509:2001 | ± 0.174 | 0.01 | | | |
| Trans fats | % | <0.010 | UNI EN ISO 5508:1998 + UNI EN ISO 5509:2001 | | 0.01 | | | |
| Dietary fiber | g/100 g | 1.56 | *Meth.Enzy m.GRAVIM. | ± 0.16 | 0.1 | | | |
| sodium | mg/Kg | 4337.00 | AM 16 2010 Rev.11 | ± 329.61 | 0.01 | | | 104.0 |
| Fatty acids: | | | UNI EN ISO 5508:1998 + UNI EN ISO 5509:200 | | | | | |
| Butyric acid C4 | % | <0.01 | UNI EN ISO 5508:1998 + | | 0.01 | | | |
| | | | UNI EN ISO 5509:200 | | | | | |
| Capronic acid C6 | % | <0.01 g | UNI EN ISO 5508:1998 + UNI EN ISO 5509:200 | | 0.01 | | | |
| Caprylic acid C8 | % | <0.01 | UNI EN ISO 5508:1998 + UNI EN ISO 5509:200 | | 0.01 | | | |
| Capric acid C10 | % | <0.01 | UNI EN ISO 5508:1998 + UNI EN ISO 5509:200 | | 0.01 | | | |
| Lauric acid C12 | % | <0.01 | UNI EN ISO 5508:1998 + UNI EN ISO 5509:200 | | 0.01 | | | |
| Myristic acid C14:0 | % | <0.01 | UNI EN ISO 5508:1998 + UNI EN ISO 5509:200 | | 0.01 | | | |
| Myristoleic acid C14:1 | % | <0.01 | UNI EN ISO 5508:1998 + UNI EN ISO 5509:200 | | 0.01 | | | |
| Pentadecan oic acid | % | <0.01 | UNI EN ISO 5508:1998 + | | 0.01 | | | |
| C15 | | | UNI EN ISO 5509:200 | | | | | |
| Palmitic acid C16:0 | % | 21.53 | UNI EN ISO 5508:1998 + UNI EN ISO 5509:200 | ±0.67 | 0.01 | | | |
| Palmitoleic acid C16:1 | % | <0.01 | UNI EN ISO 5508:1998 + UNI EN ISO 5509:200 | ±0.01 | 0.01 | | | |
| Heptadecan oic acid C17 | % | <0.01 | UNI EN ISO 5508:1998 + UNI EN ISO 5509:200 | | 0.01 | | | |
| Heptadecan oic acid C17:1 | % | 0.09 | UNI EN ISO 5508:1998 + UNI EN ISO 5509:200 | ±0.01 | 0.01 | | | |
| Stearic acid C18 | % | 4.36 | UNI EN ISO 5508:1998 + UNI EN ISO 5509:200 | ± 0.26 | 0.01 | | | |
| Oleic acid C18:1 | % | 21.16 | UNI EN ISO 5508:1998 + UNI EN ISO 5509:200 | ± 0.80 | 0.01 | | | |
| Trans-oleic acid | % | <0.01 | UNI EN ISO 5508:1998 + | | 0.01 | | | |
| C18:1trans | | | UNI EN ISO 5509:200 | | | | | |
| Linoleic acid C18:2 | % | 47.68 | UNI EN ISO 5508:1998 + UNI EN ISO 5509:200 | ±3.00 | 0.01 | | | |
| Trans linoleic acid C18:trans | % | <0.01 | UNI EN ISO 5508:1998 + UNI EN ISO 5509:200 | | 0.01 | | | |
| Linolenic acid C18:3 | % | 4.88 | UNI EN ISO 5508:1998 + UNI EN ISO 5509:200 | ± 0.31 | 0.01 | | | |
| Arachidic acid C20 | % | <0.01 | UNI EN ISO 5508:1998 + UNI EN ISO 5509:200 | | 0.01 | | | |
| Eicosenoic acid C20:1 | % | 0.16 | UNI EN ISO 5508:1998 + UNI EN ISO 5509:200 | ±0.01 | 0.01 | | | |
| Behenic acid C22:0 | % | <0.01 | UNI EN ISO 5508:1998 + UNI EN ISO 5509:200 | | 0.01 | | | |
| Energy value | Kcal/100 g | 276.6 | *Calculation | | | | | |
| Energy value | Kj/100 g | 1159.0 | *Calculation | | | | | |

| | | | | | | | | |
|---|---|---|---|---|---|---|---|---|
| **U.M. = unit of measure** **LOQ. = Lower quantification limit** **V.Guide = Guide value** **C.M.A. = Maximum admissible concentration** | | | | | | | | |

### Example II.

**Table 2: Results of the experimental tests conducted on a special-bread sample: 0 and 00 wheat flour, 40% plant composition, leavening agents, sunflower oil.**

| **Analytical test** | **Test method** | **Value** | **Measurement uncertainty, P=95% K=2** | **U.M.** | **Reference values** |
|---|---|---|---|---|---|
| Nutritional label, (average values per 100 g of product) | | | | | |
| Energy value (Kcal)* | | 311 | | Kcal/100 g | |
| Energy value (Kj)* | | 1316 | | Kj/100 g | |
| Proteins (n x 6.25)* | | 12.42 | | g/100 g | |
| Carbohydrates | | 55.64 | | g/100 g | |
| Fats | | 2.91 | | g/100 g | |
| Dietary fiber | | 3.55 | | g/100 g | |
| Total microbial load at 30 °C | | 1900000 | (16000000, 2200000) | UFC/g | |
| Enterobacteriaceae | | <10 | | UFC/g | |
| Yeasts (aw<0.95) | | <10 | | UFC/g | |
| Molds (aw<0.95) | | <10 | | UFC/g | |
| Coagulase-positive staphylococcus (staphylococcus | | <10 | | UFC/g | |
| aureus and other species) | | | | | |
| Salmonella spp search | | Absence | | Presence/absence in 25g | |
| Listeria monocytogenes | | Absence | | Presence/absence in 25g | |

### Description of the preferred embodiments

In all embodiments thereof, the nutraceutical composition of plant foods for the preparation of food products, object of the present invention, comprises: at least 1.0 g of *Solanum tuberosum* tuber; at least 0.66 g of *Cucurbita pepo* fruit; at least 0.66 g of *Daucus carota* root; at least 0.33 g of *Allium cepa* fruit; at least 0.05 g of *Capsicum* fruit; at least 0.047 g of extra virgin olive oil; at least 0.053 g of cooking salt; at least 0.0066 g of *Prunus dulcis* seeds. More in detail, in its preferred embodiment, the nutraceutical composition for the preparation of baked products is prepared, with a yield of 6073 g, by using: 1467 g of edible part of the *Solanum tuberosum* tubers that were previously washed and peeled, removing the skin therefrom, and divided into small parts; 1000 g of edible part of *cucurbita pepo* fruits that were previously washed and divided into small parts; 978 g of edible part of *Daucus carota* roots that were previously washed, peeled and divided into small parts; 501 g of edible part of the *Allium cepa* fruit-capsule that was previously washed, peeled and divided into small parts; 76 g of edible part of *Capsicum annum* berry pulp, *grossum* varietal, yellow color, previously washed, and divided into small parts. The aforesaid ingredients are then placed inside a stainless steel container, in which 66g of cooking salt is subsequently introduced together with 72 g of extra virgin olive oil, 10 g of peeled and finely divided *Prunus dulcis,* 2623 g of demineralized water.

The boiler is then closed and subjected to heating by means of flame.

The contents are then heated until an internal temperature of 90°C is reached, at which point the heating continues with free airflow, by opening the steel reactor, until a constant temperature of 105°C is attained. Said heating at 105°C is prolonged for 66 minutes.

After the 66 minutes, the power supply of the heating flame is interrupted and the homogenization and micro-grinding of the set of constituents are carried out in a timely manner by means of a mixer, such as a common mechanical blender.

The composition thus obtained is left to cool naturally.

The actual weight is then measured, which results 6073g, and the pH is measured: about 6. The product is then inserted in PET containers for foods and immediately frozen at -18°C

The addition, into the product being processed, of the nutraceutical composition of plant foods thus obtained can be executed by using common methods of dough preparation, for baked products, substituting it with the liquids normally necessary for obtaining dough, as a function of the quantity and type of food product that one intends to prepare. As already mentioned, in the case of preparation of meat-based products such as hamburger, it is preferable to add said nutraceutical composition of a predefined quantity of a flour product previously selected in accordance with tastes and requirements. Said composition is also adapted for being consumed without addition of other components for use as is, especially for people affected by dysphagia and/or anorexia.

## Claims

1. Nutraceutical composition of plant foods for the preparation of food products, comprising water; sodium, potassium, iron, calcium and manganese ions; retinol, retinoids; thiamine; riboflavin; niacin; pantothenic acid; ascorbic acid; soluble plant fibers, said composition being **characterized in that** said substances are brought by the use, for the preparation of said nutraceutical composition, of plant foods such as *solanum tubersum* tuber(s), *cucurbita pepo* fruit(s), *daucus carota* root(s), *allium cepa* fruit(s), *capsicum* fruit(s), extra virgin olive oil, cooking salt, *prunus dulcis* seed(s), said plant foods being respectively present in 3 : 2 : 2 : 1 : 0.15 : 0.14: 0.132: 0.02 ratios, calculated based on the weight of the used edible part of said plant foods.

2. Nutraceutical composition of plant foods for the preparation of food products, according to the preceding claim **characterized in that** it comprises at least 1.0 g of edible part of the *solanum tubersum* tuber, previously washed with water, preferably deionized, and lacking skin; at least 0.66 g of edible part of the *cucurbita pepo* fruit, previously washed with water, preferably deionized; at least 0.66 g of the *daucus carota* root, previously washed with preferably deionized water and lacking skin; at least 0.33 g of edible part of the *allium cepa* fruit, previously washed, preferably with deionized water, and lacking skin; at least 0.05 g of the edible part of the pulp of the *Capsicum* fruit, previously washed, preferably with deionized water; at least 0.047 g of extra virgin olive oil; at least 0.053 g of cooking salt; at least 0.0066 g of *Prunus dulcis* seeds, at least 5.0 g of water.

3. Nutraceutical composition of plant foods for the preparation of food products, according to the preceding claim **characterized in that** it comprises 1467 g of edible part of the *Solanum tubersum* tubers divided into small parts; 1000 g of edible part of *cucurbita pepo* fruits divided into small parts; 978 g of edible part of *Daucus carota* roots divided into small parts; 501 g of edible part of the *Allium cepa* fruit-capsule divided into small parts; 76 g of edible part of *Capsicum annum* berry pulp, *grossum* variety, yellow color, divided into small parts; 66 g of cooking salt; 72 g of extra virgin oil; 10 g of finely divided *Prunus dulcis* seeds.

4. Process for producing a nutraceutical composition of plant food as defined in claim 1 and/or 2 and /or 3, said nutraceutical composition comprising *solanum tuberosum* tuber(s), *cucurbita pepo,* fruit(s), *daucus carota* root(s), *allium cepa* fruit(s), *capsicum* fruit(s), extra vergin olive oil, cooking salt, *prunus dulcis* seed(s), said plant foods being respectivally present in 3 : 2 : 2 : 1 : 0.15 : 0.14 : 0.132 : 0.02 ratios, calculated based on the weight of the used edible part of said plant foods, said process providing to introduce said edible parts together with excess water, inside a steel boiler, and to heat said edible parts over flam, to grind them with a common stirrer/mixer, and to freeze at -18°C, said composition being present in suspension form after the grinding/homogenization step.

5. Process according to the preceding claim **characterized in that** the heating of the components of the nutraceutical composition of plants food initially occurs until a temperature of 90°C reached inside the boiler, and once this temperature is reached said heating is prolonged, by opening the boiler, for at least fifty minutes, preferably for sixty-six minutes at a constant temperature of 105°C

6. Nutraceutical composition of plant foods for the preparation of food products, according to any one of claims 1-3, **characterized in that** it comprises a quantity of at least one flour ingredient.

7. Nutraceutical composition of plant foods for the preparation of food products, according to the preceding claim, **characterized in that** the flour component is buckwheat flour and/or spelt four and/or barley flour and/or rice flour and/or corn flour and/or cassava flour and/or soy flour and/or chestnut flour and/or flour of legumes and cereals and/or flours obtained from dry fruit.

8. Use of the nutraceutical composition of plant foods according to any one of the claims from 1 to 3, and to claims 6, 7 for the preparation of baked food products such as bread, pasta, pizza, piadina and the like, said composition improving the workability of the dough during the preparation of said baked products and increasing the time duration and softness of said baked products, the latter having a greater quantity of water than analogous products prepared without said nutraceutical composition of plant foods.

9. Baked food products such as bread, pasta, pizza, piadina and the like **characterized in that** they are prepared and comprise the nutraceutical composition of plant foods according to any one of the claims from 1 to 3 and to claims 6, 7.

10. Use of the nutraceutical composition of plant foods according to any one of the claims from 1 to 3 and to claims 6, 7 for the preparation of meat-based food products, preferably for the preparation of products prepared by using ground meat.

11. Meat-based food products, preferably hamburgers, **characterized in that** they comprise the nutraceutical composition of plant foods according to any one of the claims from 1 to 3 and to claims 6, 7.

12. The nutraceutical composition of plant foods according to any one of the claims from 1 to 3 and to claims 6, 7 for use in treating and regulating alimentary malfunctions, food disorders and disturbances causing damage to the metabolism.

13. Use of the nutraceutical composition of plant foods according to any one of the claims from 1 to 3 and to claims 6, 7 as animal feed.

## Patentansprüche

1. Nutrazeutische Zusammensetzung pflanzlicher Nahrungsmittel zur Herstellung von Lebensmitteln, umfassend Wasser; Natrium-, Kalium-, Eisen-, Kalzium- und Manganionen; Retinal, Retinoide; Thiamin; Riboflavin; Niacin; Pantothensäure; Ascorbinsäure; lösliche pflanzliche Ballaststoffe, wobei die Zusammensetzung **dadurch gekennzeichnet ist, dass** die Substanzen eingebracht werden durch Nutzung pflanzlicher Nahrungsmittel wie Knolle(n) von *Solanum tuberosum,* Frucht/Früchten von *Cucurbita pepo,* Wurzel(n) von *Daucus carota,* Frucht/Früchten von *Allium cepa,* Frucht/Früchten von *Capsicum,* nativem Olivenöl, Kochsalz, Samen von *Prunus dulcis,* zur Herstellung der nutrazeutischen Zusammensetzung, wobei die pflanzlichen Nahrungsmittel jeweils in den Verhältnissen 3 : 2 : 2 : 1 : 0,15 : 0,14 : 0,132 : 0,02 vorliegen, berechnet auf Basis des Gewichts des verwendeten essbaren Teils der pflanzlichen Nahrungsmittel.

2. Nutrazeutische Zusammensetzung pflanzlicher Nahrungsmittel zur Herstellung von Lebensmitteln gemäß dem vorhergehenden Anspruch, **dadurch gekennzeichnet, dass** sie mindestens 1,0 g essbaren Teil der voher mit vorzugsweise entionisiertem Wasser gewaschenen *Solanum tuberosum* Knolle ohne Haut; mindestens 0,66 g essbaren Teil der voher mit vorzugsweise entionisiertem Wasser gewaschenen *Cucurbita pepo* Frucht; mindestens 0,66 g essbaren Teil der voher mit vorzugsweise entionisiertem Wasser gewaschenen *Daucus carota* Wurzel ohne Haut; mindestens 0,33 g essbaren Teil der voher mit vorzugsweise entionisiertem Wasser gewaschenen *Allium cepa* Frucht ohne Haut; mindestens 0,05 g essbaren Teil Fruchtfleisch der voher mit vorzugsweise entionisiertem Wasser gewaschenen *Capsicum* Frucht; mindestens 0,047 g natives Olivenöl; mindestens 0,053 g Kochsalz; mindestens 0,0066 g *Prunus dulcis* Samen, mindestens 5.0 g Wasser enthält.

3. Nutrazeutische Zusammensetzung pflanzlicher Nahrungsmittel zur Herstellung von Lebensmitteln gemäß dem vorhergehenden Anspruch, **dadurch gekennzeichnet, dass** sie 1467 g essbaren Teil in kleine Teile geteilter Knollen von *Solanum tuberosum;* 1000 g essbaren Teil in kleine Teile geteilter Früchte von *Cucurbita pepo;* 978 g essbaren Teil in kleine Teile geteilter Wurzeln von *Daucus carota;* 501 g essbaren Teil in kleine Teile geteilter Fruchtkapseln von *Allium cepa;* 76 g essbaren Teil von in kleine Teile geteiltem Beerenfruchtfleisch von *Capsicum annum,* Grossum Gruppe, gelbe Farbe; 66 g Kochsalz; 72 g natives Olivenöl; 10 g fein zerteilte *Prunus dulcis* Samen enthält.

4. Verfahren zur Herstellung einer nutrazeutischen Zusammensetzung pflanzlicher Nahrungsmittel aus Anspruch 1 und/oder 2 und/oder 3, umfassend *Solanum tuberosum* Knolle(n), *Cucurbita pepo* Frucht/Früchte, *Daucus carota* Wurzel(n), *Allium cepa* Frucht/Früchte, *Capsicum* Frucht/Früchte, natives Olivenöl, Kochsalz, *Prunus dulcis* Samen, wobei die pflanzlichen Nahrungsmittel jeweils in 3 : 2 : 2 : 1 : 0,15 : 0,14 : 0,132 : 0,02 Verhältnissen vorliegen, berechnet auf Basis des Gewichts des verwendeten essbaren Teils der pflanzlichen Nahrungsmittel, wobei das Verfahren vorsieht, die essbaren Teile mit einem Überschuss an Wasser in einen Stahlkochtopf einzuführen und die essbaren Teile über einer Flamme zu erhitzen, sie mit einem üblichen Rührer/Mixer zu vermahlen und bei -18°C einzufrieren; wobei die Zusammensetzung nach dem Vermahlungs-/Homogenisierungsschritt in einer Suspension vorliegt.

5. Verfahren nach dem vorhergehenden Anspruch, **dadurch gekennzeichnet, dass** das Erhitzen der Bestandteile der nutrazeutischen Zusammensetzung pflanzlicher Nahrungsmittel anfangs bis zu einer im Kochtopf erreichten Temperatur von 90°C stattfindet; und sobald diese Temperatur erreicht ist, das Erhitzen durch Öffnen des Kochtopfes für mindestens fünfzig Minuten, bevorzugt für sechzig Minuten bei einer konstanten Temperatur von 105°C verlängert wird.

6. Nutrazeutische Zusammensetzung pflanzlicher Nahrungsmittel zur Herstellung von Lebensmitteln gemäß einem der Ansprüche 1 bis 3, **dadurch gekennzeichnet, dass** sie eine Menge an mindestens einem Bestandteil aus Mehl umfasst.

7. Nutrazeutische Zusammensetzung pflanzlicher Nahrungsmittel zur Herstellung von Lebensmitteln gemäß dem vorhergehenden Anspruch, **dadurch gekennzeichnet, dass** der Bestandteil aus Mehl Buchweizenmehl und/oder Dinkelmehl und/oder Gerstenmehl und/oder Reismehl und/oder Maismehl und/oder Maniokmehl und/oder Sojamehl und/oder Esskastanienmehl und/oder Mehl von Hülsenfrüchten und Getreide und/oder Mehl aus Trockenfrüchten ist.

8. Verwendung der nutrazeutischen Zusammensetzung pflanzlicher Nahrungsmittel gemäß einem der Ansprüche 1 bis 3 und Ansprüche 6 und 7 zur Herstellung gebackener Nahrungsmittel wie Brot, Teigwaren, Pizza, Piadina und dergleichen, wobei die Zusammensetzung die Verarbeitbarkeit des Teigs während der Zubereitung der gebackenen Produkte verbessert und die Haltbarkeit und Weichheit der gebackenen Produkte erhöht, wobei das Produkt eine höhere Wassermenge aufweist als analoge Produkte, die ohne die nutrazeutische Zusammensetzung pflanzlicher Nahrungsmittel hergestellt wurden.

9. Gebackene Nahrungsmittel wie Brot, Teigwaren, Pizza, Piadina und dergleichen, **dadurch gekennzeichnet, dass** sie hergestellt werden und die nutrazeutische Zusammensetzung pflanzlicher Lebensmittel gemäß einem der Ansprüche 1 bis 3 und Ansprüche 6 und 7 enthalten.

10. Verwendung der nutrazeutischen Zusammensetzung pflanzlicher Nahrungsmittel gemäß einem der Ansprüche 1 bis 3 und Ansprüche 6 und 7 zur Zubereitung auf Fleisch basierter Nahrungsmittel, bevorzugt zur Zubereitung von durch Verwendung von durchgedrehtem Fleisch hergestellten Produkten.

11. Auf Fleisch basierende Lebensmittel, bevorzugt Hamburger, **dadurch gekennzeichnet, dass** sie die nutrazeutische Zusammensetzung pflanzlicher Nahrungsmittel gemäß einem der Ansprüche 1 bis 3 und Ansprüche 6 und 7 enthalten.

12. Nutrazeutische Zusammensetzung pflanzlicher Nahrungsmittel gemäß einem der Ansprüche 1 bis 3 und Ansprüche 6 und 7 zur Verwendung in der Behandlung und der Regulierung von Fehlfunktionen in der Ernährung, Nahrungsmittelfunktionsstörungen und Störungen, die eine Schädigung des Metabolismus hervorrufen.

13. Verwendung der nutrazeutischen Zusammensetzung pflanzlicher Nahrungsmittel gemäß einem der Ansprüche 1 bis 3 und Ansprüche 6 und 7 als Tierfutter.

## Revendications

1. Composition nutraceutique d'aliments végétaux pour la préparation de produits alimentaires, comprenant de l'eau ; des ions sodium, potassium, fer, calcium et manganèse ; du rétinol, des rétinoïdes ; de la thiamine ; de la riboflavine ; de la niacine ; de l'acide pantothénique ; de l'acide ascorbique ; des fibres végétales solubles, ladite composition étant **caractérisée en ce que** lesdites substances sont apportées par l'utilisation, pour la préparation de ladite composition nutraceutique, d'aliments végétaux tels que des tubercules de *solanum tuberosum,* des fruits de *cucurbita pepo,* des racines de *daucus carota,* des fruits *d'allium cepa,* des fruits de *capsicum,* de l'huile d'olive extra vierge, du sel de cuisine, des graines de *prunus dulcis,* lesdits aliments végétaux étant respectivement présents en des rapports de 3/2/2/1/0,15/0,14/0,132/0,02, calculés par rapport au poids de la partie comestible utilisée desdits aliments végétaux.

2. Composition nutraceutique d'aliments végétaux pour la préparation de produits alimentaires selon la revendication précédente, **caractérisée en ce qu'**elle comprend au moins 1,0 g de partie comestible de tubercule de *solanum tuberosum,* préalablement lavé à l'eau, de préférence à l'eau désionisée, et sans la peau ; au moins 0,66 g de partie comestible de fruit de *cucurbita pepo,* préalablement lavé à l'eau, de préférence à l'eau désionisée ; au moins 0,66 g de la racine de *daucus carota,* préalablement lavée de préférence à l'eau désionisée et sans la peau ; au moins 0,33 g de partie comestible du fruit *allium cepa,* préalablement lavé de préférence à l'eau désionisée, et sans la peau ; au moins 0,05 g de la partie comestible de la pulpe du fruit *Capsicum,* préalablement lavée de préférence à l'eau désionisée ; au moins 0,047 g d'huile d'olive extra vierge ; au moins 0,053 g de sel de cuisine ; au moins 0,0066 g de graines de *prunus dulcis,* au moins 5,0 g d'eau.

3. Composition nutraceutique d'aliments végétaux pour la préparation de produits alimentaires selon la revendication précédente, **caractérisée en ce qu'**elle comprend 1467 g de partie comestible des tubercules de *solanum tuberosum* divisés en petits morceaux ; 1000 g de partie comestible de fruits de *cucurbita pepo* divisés en petits morceaux ; 978 g de partie comestible de racines de *daucus carota* divisées en petits morceaux ; 501 g de partie comestible du fruit-capsule *d'allium cepa* divisé en petits morceaux ; 75 g de partie comestible de pulpe de la baie *Capsicum annum,* variété *grossum,* couleur jaune, divisée en petits morceaux ; 66 g de sel de cuisine ; 72 g d'huile d'olive extra vierge ; 10 g de graines de *prunus dulcis* finement divisées.

4. Procédé pour produire une composition nutraceutique d'aliments végétaux telle que définie dans les revendications 1 et/ou 2 et/ou 3, ladite composition nutraceutique comprenant des tubercules de *solanum tuberosum,* des fruits de *cucurbita pepo,* des racines de *daucus carota,* des fruits *d'allium cepa,* des fruits de *capsicum,* de l'huile d'olive extra vierge, du sel de cuisine, des graines de *prunus dulcis,* lesdits aliments végétaux étant respectivement présents en des rapports de 3/2/2/1/0,15/0,14/0,132/0,02, calculés par rapport au poids de la partie comestible utilisée desdits aliments végétaux, ledit procédé consistant à introduire lesdites parties comestibles, conjointement avec un excès d'eau, à l'intérieur d'une marmite en acier, et à chauffer lesdites parties comestibles sur le feu, à les broyer avec un agitateur/mélangeur commun, et à congeler à -18°C, ladite composition étant présente sous la forme d'une suspension après l'étape de broyage/homogénéisation.

5. Procédé selon la revendication précédente, **caractérisé en ce que** le chauffage des composants de la composition nutraceutique d'aliments végétaux est initialement effectué jusqu'à ce qu'une température de 90°C soit atteinte à l'intérieur de la marmite, et une fois que cette température est atteinte, ledit chauffage est prolongé, par ouverture de la marmite, pendant au moins cinquante minutes, de préférence pendant soixante-six minutes à une température constante de 105°C.

6. Composition nutraceutique d'aliments végétaux pour la préparation de produits alimentaires selon l'une quelconque des revendications 1 à 3, **caractérisée en ce qu'**elle comprend une certaine quantité d'au moins un ingrédient sous forme de farine.

7. Composition nutraceutique d'aliments végétaux pour la préparation de produits alimentaires selon la revendication précédente, **caractérisée en ce que** le composant sous forme de farine est la farine de sarrasin et/ou la farine d'épeautre et/ou la farine d'orge et/ou la farine de riz et/ou la farine de maïs et/ou la farine de manioc et/ou la farine de soja et/ou la farine de châtaigne et/ou la farine de légumes et de céréales et/ou les farines obtenues à partir de fruits sec.

8. Utilisation de la composition nutraceutique d'aliments végétaux selon l'une quelconque des revendications 1 à 3 et des revendications 6 et 7 pour la préparation de produits alimentaires de boulangerie tels que le pain, les pâtes, les pizzas, les piadinas et analogues, ladite composition améliorant l'aptitude au façonnage de la pâte durant la préparation desdits produits de boulangerie et augmentant la durée et la souplesse desdits produits de boulangerie, ces derniers ayant une plus grande quantité d'eau que des produits analogues préparés sans ladite composition nutraceutique d'aliments végétaux.

9. Produits alimentaires de boulangerie tels que le pain, les pâtes, les pizzas, les piadinas et analogues, **caractérisés en ce qu'**ils sont préparés et comprennent la composition nutraceutique d'aliments végétaux selon l'une quelconque des revendications 1 à 3 et des revendications 6 et 7.

10. Utilisation de la composition nutraceutique d'aliments végétaux selon l'une quelconque des revendications 1 à 3 et des revendications 6 et 7 pour la préparation de produits alimentaires à base de viande, de préférence pour la préparation de produits préparés par utilisation de viande hachée.

11. Produits alimentaires à base de viande, de préférence des hamburgers, **caractérisés en ce qu'**ils comprennent la composition nutraceutique d'aliments végétaux selon l'une quelconque des revendications 1 à 3 et des revendications 6 et 7.

12. Composition nutraceutique d'aliments végétaux selon l'une quelconque des revendications 1 à 3 et des revendications 6 et 7, pour une utilisation dans le traitement et la régulation de dysfonctionnements alimentaires, de troubles de l'alimentation et de perturbations endommageant le métabolisme.

13. Utilisation de la composition nutraceutique d'aliments végétaux selon l'une quelconque des revendications 1 à 3 et des revendications 6 et 7, en tant qu'aliment pour animaux.
